# EUROPÄISCHE PATENTSCHRIFT

(11) **EP 1 191 996 B1**
(45) Veröffentlichungstag und Bekanntmachung des Hinweises auf die Patenterteilung: **25.02.2004**
(21) Anmeldenummer: 01945042.8
(22) Anmeldetag: 25.04.2001
(51) Int. Cl.: B01F 7/14, B01F 15/00, A21C 1/06, A21C 1/14, B01F 15/02

(54) **KNETMASCHINE MIT DOSIERVORRICHTUNG**
KNEADING MACHINE WITH DOSING DEVICE
MALAXEUR A SYSTEME DOSEUR

(30) Priorität: 05.05.2000 EP 00109611
(43) Veröffentlichungstag der Anmeldung: 03.04.2002
(73) Patentinhaber: Artos S.A., 1150 Luxembourg (LU)
(72) Erfinder: MALFATTI, Pierluigi, I-38057 Pergine (IT); TORGHELE, Claudio, I-38100 Trento (IT)
(74) Vertreter: Oberosler, Ludwig
(86) Internationale Anmeldenummer: PCT/EP2001/004656
(87) Internationale Veröffentlichungsnummer: WO 2001/085323

(56) Entgegenhaltungen:
- GB-A- 237 889
- US-A- 4 010 932
- US-A- 4 087 079
- US-A- 4 093 506
- US-A- 4 630 930
- US-A- 5 158 782
- US-A- 5 322 368
- US-A- 5 486 049

## Beschreibung

Es sind Knetmaschinen für die Herstellung von Teig für die Zubereitung von Nahrungsmitteln bekannt welche die Funktion von einer oder von zwei Förderschnecken, von innerhalb feststehender oder rotierender Behälter, nach vertikaler oder angewinkelter Achse, rotierenden Knetarmen oder von, innerhalb geschlossener Gehäuse und nach horizontaler Achse rotierenden Rührelementen, nutzen.

Der spezifische Stand der Technik ergibt sich aus dieser letzteren Art von Knetmaschinen, welche also die Funktion von, innerhalb eines geschlossenen Gehäuses, nach horizontaler Achse rotierenden Rührelementen, nutzt.
- Die US 5,486,049 (Apparati for mixing fluid substances) zeigt eine Vorrichtung für das Mischen von flüssigen Substanzen welche unterschiedliche Viskosität aufweisen. Das Rührelement dieser Vorrichtung besteht aus mehreren, zueinander parallelen, Sprossen welche zwischen zwei koaxialen Scheiben, in gleichem Abstand zueinander und zu deren Rotationsachse, angeordnet sind.
- Die US 4,630,930 (High speed batch mixer) veröffentlicht ein Verfahren und eine Vorrichtung für die Herstellung einer Teigportion. Die Vorrichtung besteht aus zwei koaxialen Kammern, innerhalb welcher gesonderte Arbeitsphasen ablaufen welche durch voneinander getrennte und unterschiedliche Mischorgane, bzw. durch Knetorgane, ausgeführt werden. Die Zutaten für die Zubereitung des Teiges werden von oben in die erste Kammer eingeführt wo eine Durchmischung mit anschließender Weiterförderung in die zweite Kammer erfolgt, in dieser wird durch ein Knetorgan, bestehend aus zueinander parallelen Sprossen, welche an beiden Enden an entsprechenden radialen, in gleichen Winkeln abstehenden, sich um eine gemeinsame Achse drehenden, Armen befestigt sind, die Knetung durchgeführt. Die technischen Merkmale der zweiten Vorrichtung erfordern einer vorherige Durchmischung in einer, von der Knetkammer getrennten Mischkammer; die Mantellinien der inneren Mantelfläche der Mischkammer und der Knetkammer weisen eine, zur Rotationsachse des Knetorgans, koaxiale Rotationsachse auf.
- Die US 5,322,368 (Dough mixer) veröffentlicht eine Vorrichtung für die Zubereitung von Teig, welche aus einer zylindrischen Kammer mit horizontaler Achse besteht, welche im oberen Bereich eine Öffnung für die Beschickung durch freien Fall der Zutaten für die Zubereitung des Teiges und im unteren Bereich eine verschließbare Öffnung für den Auswurf des zubereiteten Teiges, aufweist. Der Arbeitsablauf innerhalb der Kammer erfolgt durch mehrere Rührflügel welche, zueinander beabstandet, an der selben Antriebswelle mit, zur Kammerachse versetzter aber paralleler Rotationsachse, im unteren Bereich der Kammer. Die Knetkammer dieser Vorrichtung kann geöffnet werden indem die scheibenförmige vertikale Wand, samt den Rührflügein und samt der Wand der Mantelfläche, zur zweiten vertikalen scheibenförmigen Wand an welcher ein Schaber samt dem entsprechenden Antriebsmotor gelagert ist, axial verschiebbar ist.
- Es sind weiters kleinere mechanische Vorrichtungen für die Zubereitung von Teig in Haushalten bekannt; diese bestehen allgemein aus einem zylindrischen Behälter mit vertikaler Achse, innerhalb welchem ein oder mehrere, an einer einzigen, zur Behälterachse koaxialen Antriebswelle befestigte Rührflügel wirken.

All diese bekannten Vorrichtungen sind nicht für die Zubereitung von je einzelnen Teigportionen pro Arbeitszyklus, innerhalb relativ kurzer Zeitabschnitte und infolge von Beschickung mit Zutaten in Einzeldosis, konzipiert; weiters ist nicht vorgesehen, daß jede einzelne vermengte und zusammengeballte Teigportion, fertig für die Formgebung und den Backvorgang, ohne im Inneren der Vorrichtung Spuren von Zutaten oder Teigresten zu hinterlassen, ausgeworfen wird. Die bekannten Vorrichtungen sind weiters nicht konzipiert um eine periodische automatische Sterilisierung der Knetkammer, samt der in dieser vorgesehenen Knetorgane, ohne menschliche Einwirkung, durchführen zu können.

Es ist weiters das Problem der Beschickung von Knetvorrichtungen mit relativ genauer volumetrischer Dosierung des Mehles oder der mehl-, bzw. staubartigen, Zutaten, welche mehr oder weniger hygroskopisch sind, bekannt. Diese Probleme gründen auf der Tendenz, daß das mehlartige Material Überbrückungen oder Agglomerate im Innern der Behälter bildet, daß das Variieren des Materialvolumens über dem Dosiermechanismus, die Dosisbildung stark beeinflußt und daß es schwierig ist, die gleichmäßige Abfüllung und/oder Entleerung der Dosierkammern, zu erreichen.

Die Erfindung stellt sich die Aufgabe eine Knetmaschine der eingangs beschriebenen Art zu schaffen, welche eine einfache und kompakte Konstruktion aufweist, für die Durchführung einer automatischen Sterilisation geeignet ist, eine wesentlich zylindrische Kammer mit horizontaler Achse, in welcher ein sich mit horizontaler Drehachse wirkendes Knetorgan bewegt um, infolge direkter Beschickung der Kammer mit vordosierten Zutaten, je Arbeitszyklus, in relativ kurzem Zeitabschnitt, eine Teigportion herzustellen welche endlich als vermengte und zusammengeballte Einzelportion, vorgefertigt für die folgende Formgebung, die eventuelle Garnierung und den Back- oder Tiefkühlvorgang, ausgeworfen wird.

Zur Lösung dieser Aufgabe schlägt die Erfindung vor ein Gehäuse zu schaffen dessen innere Kammer wesentlich zylindrisch ist und im oberen, dem Beschickungsbereich für die mehlartigen und eventuell auch die flüssigen Zutaten entsprechenden, Abschnitt sowie auch im unteren, dem Auswurfbereich entsprechenden, Abschnitt, einen ebenen Oberflächenbereich aufweist welcher parallel zur Achse der Kammer verläuft und in die Mantelfläche der Kammer übergeht. Innerhalb dieser Kammer wirkt ein, gemäß einer koaxial oder parallel zur Achse der Kammer verlaufenden Achse, rotierendes Knetorgan, wobei dieses aus mindestens einem, mit einem Ende radial am Ende einer Antriebswelle angebrachten, Arm gebildet wird, an dessen anderem Ende mindestens ein feststehender Lagerzapfen, freitragend und mit parallel zur Rotationsachse der Antriebswelle verlaufender Achse, befestigt ist, auf welchen Zapfen eine frei drehbare Hülse mit beidseits abgerundeten Endbereichen, mittels Blindbohrung, aufgesteckt ist. Vorteihafterweise werden zwei radial von der selben Antriebswelle abstehende Arme vorgesehen sein welche zueinander in Längsrichtung ausgerichtet sind oder zwar in einer gleichen Ebene liegen aber zueinander angewinkelt sind, wobei jeder dieser Arme einen Lagerzapfen mit aufgesteckter, parallel zur Antriebsachse drehbarer Hülse, vorzugsweise mit unterschiedlichem Abstand zur Rotationsachse der Antriebswelle, trägt. Während der Bewegung dieser, mit drehbaren Hülsen ausgestatteten, Lagerzapfen erfährt der Teig, durch die frei drehbaren Hülsen, insbesondere im unteren Bereich der Kammer mit dem ebenen Oberflächenabschnitt welcher in die gebogene Mantelfläche übergeht, eine wiederholte Verdichtung, Berollung und Auswalzung. In Gegenwart von mehreren dieser Hülsen können diese, in Bezug auf die Konsistenz des herzustellenden Teiges und/oder die Eigenschaften der Zutaten und/oder auf den Prozentanteiles der flüssigen Zutaten, unterschiedlichen Außendurchmesser, Querschnitt oder verschiedene Formen aufweisen. Die Erfindung sieht weiters die Austauschbarkeit und/oder die Änderung der Anzahl der genannten Hülsen, in Bezug auf die Eigenschaften der Zutaten und/oder des herzustellenden Teiges, vor.

Infolge der Beschickung der Kammer mit trockenen mehlartigen Zutaten führt das Knetorgan die Arbeitsphase zwecks Homogenisierung und Belüftung der trockenen Zutaten durch indem es sich mit relativ hoher Drehzahl bewegt um so, in relativ kurzer Zeit, eine bessere Durchmischung der eingebrachten Zutaten und deren Vorbereitung für die folgende Einbringung der flüssigen Zutaten durchzuführen wodurch eine gleichmäßige Absorbtion gesichert wird und, bei anschließender merklicher Drehzahlvermindedrung, ein Teigagglomerat erzeugt wird; durch anschließende weitere Drehzahlverminderung wird ein Vermengen und Homogenisieren der Teigmasse erreicht welche anschließend, bei noch weiter reduzierter Drehzahl, verdichtet und zu einer Einzelportion zusammengeballt wird welche als solche, unter Einwirkung von Fliehkraft endlich durch öffnen der Auswurföffnung im Bereich welcher dem unteren ebenen Oberflächenabschnitt der Kammer entspricht, ausgeworfen wird.

Nachdem erfindungsgemäß die einzelnen Innenoberflächen und Flächenbereiche der Kammer der Knetmaschine Flächenübergänge mit Abrundungen mit möglichst großem Radius und, sei es die sich drehenden Arme als auch die Hülsen, des Knetorgans abgerundete Formen aufweisen, präsentiert sich der Kammerinnenraum frei von Kanten oder Ausnehmungen an welchen, infolge des Knet- und Zusammenballungsvorganges, nicht mit der ausgeworfenen Einzelporzion vermengte, Teigreste haftend zurückbleiben könnten. Nach der Zusammenballung und dem Auswurf wird die Kammer und das Knetorgan also suber und frei von jeglichen Teigresten oder Zutatenresten sein. Weiters eignet sich diese Formgebung der Kammerinnenflächen und des Knetorgans für eine Sterilisierung mittels Heißluft durch welche auch eventuelle verklebte kleine Teigrückstände durch Trocknung und unter Druckeinwirkung abgelöst und, im Luftstrom schwebend, ausgeblasen werden.

Die stirnseitige Oberfläche der Kammer, welche jener zweiten stirnseitigen Oberfläche aus der die Antriebswelle für das Knetorgan hervorragt gegenüberliegt, kann ebene, konische gegen die Antriebswelle vorspringende oder mehr oder weniger abgerundete, Form haben, wobei sich deren Achse koaxial zur Rotationsachse der Antriebswelle oder parallel zu dieser, vorzugsweise im oberen Bereich der Kammer erstreckt. Durch eine ausgeprägte konische oder nasenkonische Form kann erreicht werden, daß die rotierenden Hülsen des Knetorgans auch gegenüber diese Ausformung einen Auswalzeffekt ausüben. Erfindungsgemäß kann weiters jene Gehäusewand welche dieser stirnseitigen, mit mehr oder weniger ausgeprägten Ausformungen versehenen, Innenfläche entspricht, durch eine andere Gehäusewand ausgetauscht werden um, durch Veränderung des Abstandes zwischen den stimseitigen Kreisflächen , das Volumen der Kammer zu verändern; in diesem Fall werden auch die Hülsen am Knetorgan durch Hülsen mit geeigneter Längserstreckung ausgetauscht.

Vorteilhafterweise wird die flüssige Zutat, bzw. werden die flüssigen Zutaten, für die Zubereitung des Teiges durch eine oder durch mehrere Öffnungen, im zentralen Bereich, an jener stirnseitigen Wand welche der Wand mit Antriebswelle entgegenliegt, eingeführt.

Was die volumetrische Dosierung der trockenen, mehlartigen Zutaten betrifft, schlägt die Erfindung vor, im Bereich der mit, z.B. gleitendem, Schieber ausgestatteten Beschickungsöffnung der Knetmaschine, eine Dosiervorrichtung vorzusehen welche wesentlich aus einem zylindrischen Behälter mit vertikaler Achse für das Mehl besteht, wobei dieser am Boden mit einem volumetrischen Dosiermechanismus ausgestattet ist. Dieser Behälter weist erfindungsgemäß, innen, im unteren Bereich, eine ringförmige, trichterartige Scheidewand auf, durch deren zentrale, kreisförmige Öffnung die Spitze eines Verteilerkonus ragt so, daß ein ringförmiger Durchlaß für das Mehl frei bleibt. Im Bodenbereich des Behälters ist ein Dosiergitter vorgesehen über welchem, während der Rotation des Verteilerkonus welcher Über eine vertikale zentrale Welle durch einen Motor angetrieben wird, sich Rührstäbe bewegen um das Mehl, durch das Dosiergitter hindurch, in die durchgehenden Bohrungen zu befördern, welche ringförmig mit gleichem Abstand zur Rotationsachse an der darunterliegenden Dosierscheibe vorgesehen sind. Die Dosierscheibe liegt an der Bodenscheibe auf welche mit der zylindrischen Wand des Behälters verbunden ist und welche im Bereich der Beschickungsöffnung der darunter angebrachten Knetmaschine, eine Bohrung aufweist durch welche das Mehl aus den Dosierbohrungen an der sich drehenden Dosierscheibe und durch die Beschickungsöffnung in die Kammer der Knetmaschine fällt.

Die Erfindung schließt nicht aus, daß die erfindungsgemäße Knetmaschine von einer Dosiervorrichtung welche andere Merkmale als die von der Erfindung vorgeschlagenen aufweist, oder von einer Vorrichtung welche eine Beschickung mit vorportionierter Dosis durchführt, gespeist wird.

Die Erfindung wird anschließend anhand eines, in den beigelegten Zeichnungen schematisch dargestellten, vorzuziehenden Ausführungsbeispieles einer, mit Einzeldosis erfindungsgemäß beschickten, erfindungsgemäßen Knetmaschine für die Zubereitung von Einzelportionen von ca. 130 - 260 g. in einer Zeit von ca. 10 - 15 Sekunden, welche insbesondere für die Herstellung von Fladen oder Pizzas geeignet ist, näher erklärt.

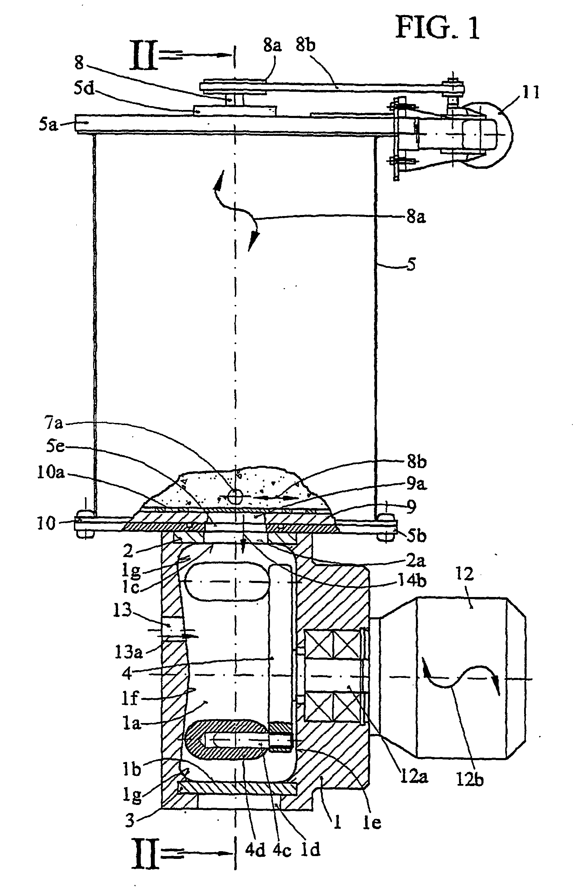

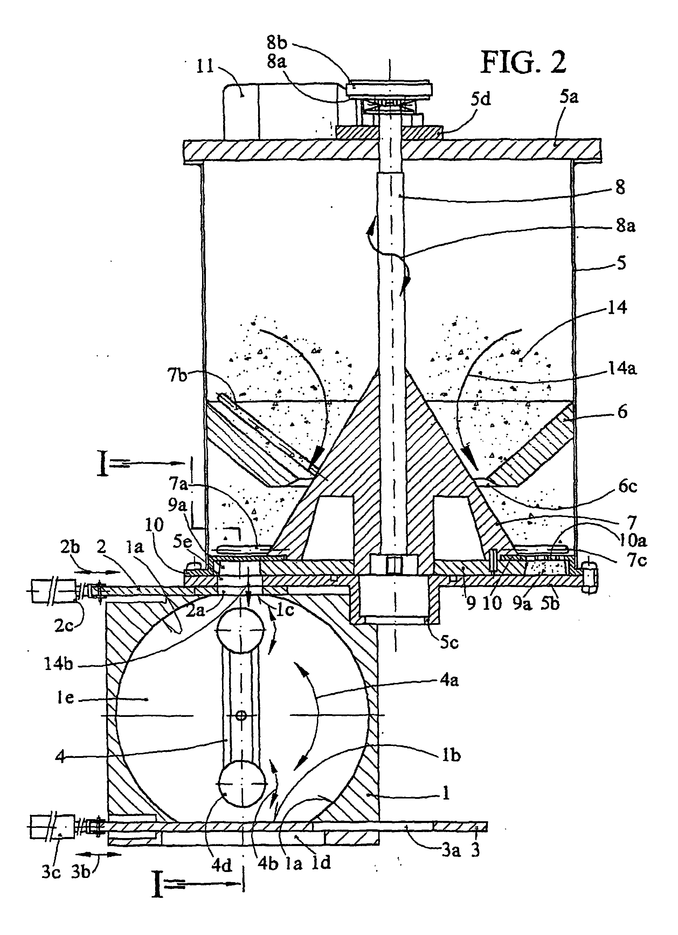

Die Fig. 1 zeigt eine erfindungsgemäße Knetmaschine in Beschickungsphase welche mit einer erfindungsgemäßen Dosiervorrichtung gekoppelt ist in Schnittdarstellung gemäß der in Fig. 2 gezeigten Schnittfläche I-I welche durch die Achse der Antriebswelle der Dosiervorrichtung verläuft.

Die Fig. 2 zeigt die in Fig. 1 dargestellte erfindungsgemäße Knetmaschine samt Dosiermaschine in Schnittdarstellung gemäß der in Fig. 1 gezeigten Schnittlinie II-II.

Die erfindungsgemäße Knetmaschine für die Zubereitung von Einzelportionen besteht wesentlich aus einem Gehäuse 1 mit innerer Kammer und Knetorgan 4, 4c, 4d, welche eine Beschickungsöffnung 2a und eine Auswurföffnung 3a, 1d, mit entsprechenden Schiebern 2, 3, aufweist. Die wesentlich zylindrische Kammer mit horizontaler Achse ist durch eine ebene Kreisfläche 1e aus welcher koaxial eine Welle 12a ragt, durch einer Kreisfläche 1f welche der vorgenannten entspricht aber eine leicht in die Kammer vorspringende konische Form aufweist, durch zwei gebogenen Flächenabschnitten 1 a mit, von der Kammerachse gleich entfernten Mantellinie, durch einen oberen ebenen Flächenabschnitt 1 c welcher wesentlich dem Bereich der Beschickungsöffnung 2a entspricht und durch einen unteren ebenen Flächenabschnitt 1b, welcher größer als der obere ist und dem Bereich der Auswurföffnung 1d, 3a entspricht, begrenzt.

Das Knetorgan besteht aus einem Arm 4 welcher stimseitig am, ins Kammerinnere ragende, Ende der Antriebswelle 12a befestigt ist; an jedem der Enden des Arms 4 ist ein Zapfen 4c befestigt dessen Achse parallel zur Rotationsachse der Antriebswelle 12a verläuft, auf jeden dieser Zapfen 4c ist eine sich frei drehende 4b Hülse 4d mit abgerundeten, halbkugelförmigen oder nasenkonusförmigen Endbereichen, mittels blinder Bohrung aufgesteckt. Der Arm 4 des Knetorgans ist an der Antriebswelle 12a, bezüglich der querverlaufenden Mittellinie des Arms, außermittig befestigt um zu erreichen, daß die zwei daran befestigten Zapfen 4c mit den Hülsen 4d, mit unterschiedlichem Radius sich um die Rotationsachse der Antriebswelle 12a, welche durch den Elektromotor 12 mit verschiedenen Drehzahlen und Änderung der Drehrichtung angetrieben wird, drehen 4a.

Die Beschickungsöffnung 2a für die Einführung 14b der mehlartigen Zutaten im oberen Bereich und die Auswurföffnung 3a, 1d für die zusammengeballte Teig-Einzelportion im unteren Bereich, sind mit gleitenden Schiebern 2, 3 versehen welche beispielsweise durch Pneumatikzylinder 2c, 3c bewegt 2b, 3b werden, ohne jedoch den Einsatz von rotierenden Schiebern und anderen Antrieben auszuschließen.

Die Beschickung mit den flüssigen Zutaten erfolgt über eine einzige Bohrung 13 oder über spezifische Bohrungen für jede der flüssigen Zutaten welche alle vorzugsweise an der scheibenförmigen Wand 1f mit konischer Ausformung vorgesehen sind und zwar im Bereich innerhalb der Laufbahn jener Hülse 4d welche sich mit kleinerem Radius um die Welle dreht 4a. Die selbe Bohrung 13 kann für das Einblasen von Heißluft benützt werden um eine Reinigung und/oder eine Sterilisierung der Kammer und der rotierenden Knetorgane 4, 4c, 4d zu erzielen. Das Verfahren für die Zubereitung des Teiges mittels der erfindungsgemäßen Knetmaschine läuft wesentlich nach folgenden Phasen ab:
- Beschickung 14b mit den mehl- und/oder staubartigen Zutaten,
- Homogenisierung und Belüftung der mehl- und/oder staubartigen Zutaten,
- Beschickung 13a mit den flüssigen Zutaten,
- Zubereitung des Teiges,
- Auswalzen des Teiges,
- Verdichtung und Zusammenballung des Teiges,
- Auswurf der Teig-Einzelportion.
   Nach der Produktion einer vorprogrammierten Anzahl von Teigportionen, unter Berücksichtigung der Produktionsintervalle, wird die Kammer der Knetmaschine einer Säuberung und Sterilisierung durch Heißluft unterzogen.
- Die Beschickung 14b mit den mehl- und/oder staubartigen Zutaten erfolgt durch freien Fall durch die Beschickungsöffnung 2a hindurch welche mit einem gleitenden, durch Pneumatikzylinder 2c angetriebenen 2b, Schieber 2 versehen ist. Der Aufbau und die Arbeitsweise der erfindungsgemäßen Dosiervorrichtung welche mit ihrer Auswurföffnung 5e, übereinstimmend mit der Beschickungsöffnung 2a der Knetmaschine, mit dieser gekoppelt ist, werden später erklärt.
- Die Homogenisierung und Belüftung der mehl- und/oder staubartigen Zutaten erfolgt durch Rotieren des Knetorgans 4, 4c, 4d zu einer relativ hohen Drehzahl (ca. 2.500 - 3.000 U/min.) wodurch ein, durch die besondere Ausformung der Kammer und der Knetorgane, begünstigtes Verstreuen der Zutaten erfolgt, wodurch die Teilchen der trockenen Zutaten für gleichmäßige Aufnahme der flüssigen Zutaten, infolge der Beschickung 13a, vorbereitet sind.
- Die Zubereitung der Teigmischung erfolgt durch Rotieren 4a des Knetorgans 4, 4c, 4d zu einer niedrigeren Drehzahl (ca. 950 - 1.400 U/min.); in diese Phase erfolgt anfänglich die Bildung von Teigklümpchen welche anschließend durch die wiederholte Wirkung der rotierenden 4b Hülsen 4d zusammengewalzt werden.
- Die Zubereitung des Teiges erfolgt anschließend durch Rotieren des Knetorgans 4, 4c, 4d zu einer noch niedrigeren Drehzahl (ca. 850 - 920 U/min.), insbesondere in dieser Phase wird der Teig durch die sich drehenden 4b Hülsen 4d wiederholt und intensiv, besonders auf der unteren ebenen Fläche 1b gerollt und ausgewalzt.
- Die Bildung einer kompakten und zusammengeballten Teigmasse erfolgt zu einer noch niedrigeren Drehzahl (ca. 700 ―820 U/min.) um am Ende dieser Phase die Form eines "Teigballens" anzunehmen.
- Der Auswurf des "Teigballens" erfolgt durch Fliehkraft welche über das rotierende Knetorgan wirkend wird und durch Schwerkraft, durch die Auswurföffnung 3a hindurch deren Öffnen durch Betätigen 3b des Schiebers 3 seitens Pneumatikzylinder 3c erfolgt.

Während der verschiedenen Arbeitsabläufe, insbesondere während der Verdichtung, dem Auswalzen, und dem Zusammenballen, kann es vorteilhaft sein eine oder mehrere Änderungen der Drehrichtung 4a des Knetorgans 4, 4c, 4d durchzuführen. Die Beschickung 13a mit den flüssigen Zutaten kann mehr oder weniger stufenweise und während der Rotation des Knetorgans 4, 4c, 4d erfolgen. Zur Säuberung und/oder Sterilisierung der Kammer durch Einblasen von Heißluft, kann die Kühlluft des, das Knetorgan antreibenden 12a, Motors 12 oder, von der Pneumatikanlage abgezweigte, Luft genutzt werden welche, vor dem Einblasen in die Kammer, erhitzt wird.

Die erfindungsgemäße, volumetrische Dosiervorrichtung für die trockenen mehlartigen Zutaten besteht wesentlich aus einem zylindrischen Behälter 5,5a, 5b mit vertikaler Achse, aus einem, koaxial zur Behälterachse rotierenden 8a Verteilerkonus 7 mit Rührstäben 7a, 7b und aus einer Dosierscheibe 9 mit einem Kranz von Dosierbohrungen 9a welche die Volumeneinheiten zur Bildung der Gesamtdosis an Mehl 14 darstellen mit welcher die Knetmaschine 1 beschickt 14b wird um eine Teig-Einzelportion zu erzeugen.

Die zylindrische vertikale Wand 5 ist unten durch eine Bodenplatte 5b verschlossen welche zentral eine Lagerung 5c für das untere Ende einer vertikalen rotierenden 8a Welle 8 aufweist welche im oberen Bereich zentral in der Deckelplatte 5a gelagert 5d ist. Das obere Ende dieser Welle 8 welches über die Deckelplatte 5a hinausragt, ist mit einer Riemenscheibe 8a für einen, durch am Behälter befestigten Motor 11 angetriebenen Riemen 8b, versehen. Natürlich kann der Antrieb der Welle 8 auch auf andere Weise und über andere Antriebsmittel erfolgen. Innen, im unteren Bereich, ist der Behälter mit einer ringförmigen, trichterartigen Scheidewand 6 versehen um das Mehl 14 in Richtung Behälterachse zu leiten. Durch die zentrale Öffnung in dieser Scheidewand 6 hindurch ragt der obere Bereich eines, mit der Antriebswelle 8 verbundenen, Verteilerkonus 7 so, daß zwischen dem Konus und der Scheidewand 6 ein freier ringförmiger Durchlaß 6c für das Mehl 14 entsteht; das Durchsickern 14a des Mehles wird durch, vom Konus 6 abragende Rührstäbe 7b welche sich dicht über der Scheidewand 6 bewegen, aktiviert. Die Scheidewand 6 zusammen mit dem Konus 7 verhindert, daß das Variieren des Füllstandes des Mehles 14 und somit des Gewichtes oberhalb der Scheidewand 6, sich auf den darunter vorgesehenen Dosiermechanismus auswirkt. Dieser Mechanismus besteht aus einer, mit einem Kranz von Bohrungen 9a versehenen, Dosierscheibe 9 welche, zusammen mit dem Verteilerkonus 7 und der Antiebswelle 8, rotiert; dabei stellen die einzelnen Bohrungen 9a, welche zur Drehachse der Scheibe gleichen Abstand haben, mit ihrem Volumen die Dosiereinheit für die Bildung der Beschickungsdosis dar. Über dieser Dosierscheibe 9 ist ein Gitter 10 mit Durchlässen 10a vorgesehen durch welche das Mehl, durch mindestens einen vom Konus 7 abstehenden und mit der Antriebswelle 8 sich drehenden 8a Rührstab 7c, welcher sich über dem Gitter 10 bewegt, hindurchbewegt wird. An der Unterseite liegt die Dosierscheibe 9 auf der Bodenscheibe 5b des Behälters auf. Diese Bodenscheibe 5b weist eine durchgehende Enleerungsbohrung 5e auf welche dem Durchmesser der Bohrungen 9a an der Dosierscheibe 9 entspricht oder größer als deren Durchmesser ist und sich im Bereich des Durchlaufes dieser Bohrungen befindet. Die Praxis hat gezeigt, daß durch diese beschriebene Konstruktion es möglich ist, unabhängig vom Füllstand im Behälter, dem Feuchtigkeitsgrad und der anderen physikalischen Eigenschaften des Inhaltes, eine volumetrische Dosierung durchzuführen welche ausreichend konstant und eventuell nach Wunsch um eine oder mehrere, durch die einzelnen Bohrungen 9a an der Dosierscheibe 9 bestimmte, Volumeneinheiten variiert werden kann.

Dieses Merkmal der Dosiervorrichtung ist grundlegend um eine Homogeneität in den Teig-Einzelportionen zu erreichen welche eine Beschickung mit kalibrierten und homogenisierten Zutaten voraussetzt und vor allem dadurch erreicht wird, daß in einem einzigen Gehäuse 5, 5a, 5b welches, sei es als Behälter, als auch als Dosierer funktioniert, die Masse des Inhaltes nicht den darunter vorgesehenen Dosiermechanismus belastet welcher über einen relativ schmalen ringförmigen Durchlaß 6c und unter Wirkung von gleichzeitigen Mischbewegungen im Behälterbereich über der Scheidewand 6 und im Abfüllbereich der Dosierlöcher 9a an der Dosierscheibe 9, gespeist wird. Natürlich muß die Menge des Mehles 14 welche sich durch den ringförmigen Durchlaß 6c bewegt mindestens gleich groß, vorzugsweise etwas größer, in Bezug auf die Menge welche als Dosis der Knetmaschine, zwecks Erhaltung der Einzel-Teigportion, zugeführt wird, sein.

## Patentansprüche

1. Knetmaschine zur Herstellung von Teig für Teigwaren, welche mit einer Dosiervorrichtung für die mehlartigen Zutaten ausgestattet ist, von der Art mit geschlossenem Gehäuse mit horizontaler Achse in welchem ein Knetorgan mit, zur Gehäuseachse koaxialer oder paralleler Drehachse wirkt, **dadurch gekennzeichnet, daß** die Kammer der Knetmaschine innerhalb des Gehäuses (1) zwei innere wesentlich kreisförmige, sich gegenüberstehende, zueinander koaxiale und beabstandete Flächen (1e, 1f) aufweist zwischen denen sich zwei Mantelflächenabschnitte (1a) erstrecken welche kreisbogenförmig und mit der selben Mantellinie verlaufen und im oberen und unteren Bereich in einen ebene Flächenabschnitt (1 b, 1 c) übergehen, wovon jeder mindestens teilweise durch die Oberfläche eines gleitenden (2c, 3c) Schiebers (2, 3) in Schließstellung gebildet ist; daß entlang dem Umfangsbereich an beiden kreisförmigen Flächen(1e, 1f) zu den Mantelflächenabschnitten (1a) und zu den ebenen Flächenabschnitten (1c, 1b) ein Übergang (1g) mit großem Abrundungsradius vorgesehen ist und daß die Kreisfläche (1f) welche der ebenen Kreisfläche (1e) aus welcher die Antriebswelle (12a) für das Knetorgan ((4, 4c, 4d) hervorragt entgegensteht, eine leicht konische oder gewölbte, in das Kammerinnere, koaxial zur Rotationsachse des Knetorgans (4, 4c, 4d) vorstehende, Form hat.

2. Knetmaschine mit Dosiervorrichtung gemäß Patentanspruch 1, **dadurch gekennzeichnet, daß** in der Kammer der Knetmaschine, die Kreisfläche (1f) welche der Kreisfläche (1e) aus welcher die Antriebswelle (12a) für das Knetorgan (4, 4c, 4d) ragt, eine ausgeprägte konische, nasenkonische oder zylindrische Form mit halbkugelförmigem Ende hat welche koaxial oder parallel zur Rotationsachse des Knetorgans (4, 4c, 4d) ist.

3. Knetmaschine mit Dosiervorrichtung gemäß Patentanspruch 1, **dadurch gekennzeichnet, daß** die Kreisfläche (1f) welche der Kreisfläche (1e) aus welcher die Antreibswelle (12a) für das Knetorgan (4, 4c, 4d) hervorragt, eine oder mehrere Bohrungen (13) für die Zuführung der flüssigen Zutaten aufweist und daß die Bohrung oder die Bohrungen (13) in einem zentralen Bereich der Kreisfläche (1f) vorgesehen sind welcher innerhalb der kreislinienförmigen Laufbahn der Enden des Knetorgans (4, 4c, 4d) liegt.

4. Knetmaschine mit Dosiervorrichtung gemäß Patentansprüche von 1 bis 3. **dadurch gekennzeichnet, daß** die Kammer der Knetmaschine samt dem Knetorgan (4, 4c, 4d) von Zeit zu Zeit dem Durchzug von Heißluft ausgesetzt werden welche durch eine eigene Bohrung oder Düse oder durch eine oder mehrere Bohrungen (13) welche für die Beschickung mit den flüssigen Zutaten vorgesehen sind, eingeblasen wird und durch die Auswurföffnung (3a, 1d) abfließt und daß dieser Luftdurchzug durch den Antriebsmotor (12) der Knetmaschine oder von einer pneumatischen Anlage erzeugt und vor dem Einblasen erhitzt wird um die Sterilisierung der Kammer und des Knetorgans und das Loslösen eventueller Teigteilchen oder von Zutatenresten und deren Beförderung im austretenden Luftstrom zu erreichen.

5. Knetmaschine mit Dosiervorrichtung gemäß Patentanspruch 1, **dadurch gekennzeichnet, daß** das Knetorgan der Knetmaschine aus einem Arm (4) besteht welcher radial vom Ende der Antriebswelle (12a) absteht und von dessen freien Ende ein feststehender Zapfen (4c) mit parallel zur Rotationsachse des Arms verlaufenden Achse befestigt ist an welchem eine zylindrische Hülse (4d) mittels axialer Blindbohrung aufgesteckt ist und daß beide Endbereiche der Hülse (4d), abgerundet, kugelkuppen- oder nasenkonusförmig sind.

6. Knetmaschine mit Dosiervorrichtung gemäß Patentanspruch 1 und teilweise gemäß Patentanspruch 2, **dadurch gekennzeichnet, daß** das Knetorgan aus zwei oder mehreren Armen (4) besteht welche radial vom Ende der Antriebswelle (12a), eventuell zueinander unterschiedlich angewinkelt, abstehen und an deren Enden jeweils ein feststehender Zapfen (4c) mit, zur Rotationsachse der Arme (4), paralleler Längsachse befestigt ist, an welchen jeweils Hülsen (4d) aufgesteckt sind welche gegebenenfalls unterschiedlichen Außendurchmesser und/oder unterschiedliche Form aufweisen und daß die Achsen der einzelnen Zapfen (4c) an den jeweiligen Armen (4) nicht gleichen Abstand zur gemeinsamen Rotationsachse haben.

7. Knetmaschine mit Dosiervorrichtung gemäß den Patentansprüchen von 1 bis 6, **dadurch gekennzeichnet, daß** die Wand mit jener stirnseitigen Kreisfläche (1f) der Kammer der Knetmaschine, welche der stirnseitigen Kreisfläche (1e) aus welcher die Antriebswelle (12a) für das Knetorgan (4, 4c, 4d) ragt, entgegensteht, mit Wänden austauschbar ist welche geeignet sind den Abstand zwischen den beiden stirnseitigen Flächen (1e, 1f) zu verändern und daß, in Abhängigkeit dieser Veränderung, auch die Hülsen (4d) ausgetauscht werden können.

8. Knetmaschine mit Dosiervorrichtung gemäß dem Schutzanspruch 1, **dadurch gekennzeichnet, daß** die an der Knetmaschine angebrachte Dosiervorrichtung innerhalb dem selben zylindrischen Behälter (5, 5a, 5b) mit vertikaler Achse im oberen Bereich Staubereich für das Mehl (14) und im unteren Bereich einen Dosiermechanismus beinhaltet, wobei die Rührorgane (7b) für den Staubereich des Mehles, zusammen mit den Rührorganen (7a) des Dosiermechanismus durch eine gemeinsame, mit der Behälterachse koaxiale, Welle (8) betätigt werden und daß diese Welle außerdem mit einem Vertilerkonus (7) für das Mehl zum Dosierbereich und mit einer, mit einem Kranz von unter sich und zur Drehachse gleich beabstandeten Dosierbohrungen (9a) versehenen, Dosierscheibe (9) verbunden ist.

9. Knetmaschine mit Dosiervorrichtung gemäß den Patentansprüchen 1 und 8, **dadurch gekennzeichnet, daß** im Behälter der Dosiervorrichtung, der Staubereich für das Mehl (14), in Bezug zum Dosierbereich, durch eine ringförmige, trichterartige Scheidewand (6), durch deren zentrale Öffnung der obere Teil des Verteilerkonus (7) ragt, um einen ringförmigen Durchlaß (6c) für das Mehl (14) zu bilden, horizontal unterteilt ist und daß mindestens ein Rührelement (7b) welches radial vom Verteilerkonus (7) abragt, nahe der oberen Fläche der Scheidewand (6), wirkt.

10. Knetmaschine mit Dosiervorrichtung gemöß den Patentansprüchen 1, 8 und 9, **dadurch gekennzeichnet, daß** in der Dosiervorrichtung der Dosiermechanismus, bestehend aus einer Dosierscheibe (9) mit durchgehenden Dosierbohrungen (9a), von der selben Welle (8) angetrieben (8a) wird welche den Verteilerkonus (7) samt den Rührelementen (7a, 7b) antreibt, daß diese Dosierscheibe drehbar zwischen der feststehenden, ebenen Bodenplatte (5b) des Behälters der Dosiervorrichtung und einem ringförmigen, feststehendem Gitter (10) gelagert ist, wobei die Bodenplatte (5b) die untere Auflage bildet und das Gitter (10) den oberen, vom Verteiterkonus (7) freien Ringbereich der Dosierscheibe (9) abdeckt und daß die Bodenplatte (5b), im Bereich der Laufbahn der Dosierbohrungen (9a) der Dosierscheibe (9), eine durchgehende Entleerungsöffnung (5e) aufweist.

11. Knetmaschine mit Dosiervorrichtung gemäß den Patentansprüchen 1, 8, 9, 10, **dadurch gekennzeichnet, daß** innerhalb der Dosiervorrichtung, das Gitter (10) welches die Dosierscheibe (9) mindestens im Bereich der Laufbahn der Dosierbohrungen (9a) abdeckt, im Entleerungsbereich welcher durch die Entlehrungsbohrung (5e) an der Bodenplatte (5b) definiert ist, keine Durchlässe (10a) für das Mehl aufweist und daß mindestens ein, vom Verteilerkonus (7) abstehendes Rührorgan (7a), während dessen Drehung (8a), nahe der Oberfläche des Gitters vorbeistreicht.

12. Knetmaschine und Dosiervorrichtung gemäß den Patentansprüchen von 1 bis 11, **dadurch gekennzeichnet, daß** jede der beiden Vorrichtungen auch voneinander unabhängig funktionieren kann, wobei eventuell die Knetmaschine mit einer Dosiervorrichtung bekannter Art, bzw. die Dosiervorrichtung mit einer Knetvorrichtung bekannter Art gekoppelt sein kann.

## Claims

1. A dough mixer for the production of dough for baked goods that is equipped with a metering device for flour-like ingredients, of the kind with closed housing with horizontal axis in which a kneading element operates with rotational axis that is coaxial or parallel to the housing axis, **characterized in that** chambers of the dough mixer inside a housing (1) having two inner, essentially circular, juxtaposed, coaxial and separated surfaces (1e, 1f) between which two casing surface sections (1a) extend which run in an arc along the same casing line and change in the upper and lower region into a flat surface section (1b, 1c), of which each is at least partially formed by the surface of a sliding (2c, 3c) blade (2,3) in its closed position; that along the perimeter on both circular surfaces (1e, 1f) a cross piece (1g) with large rounding-off radius is provided to the casing surface sections (1 a) and to the level surface sections (1c, 1b), and that the circular surface (1f) which is across from the flat circular surface (1e) from which the drive shaft (12a) extends for the kneading element (4, 4c, 4d) has a slight conical or domed form that projects out into the inner chamber, coaxially to the rotational axis of the kneading element (4, 4c, 4d).

2. The dough mixer with metering device according to Claim 1, **characterized in that** the circular surface (1f) in the chamber of the dough mixer, which from the circular surface (1e) from which the drive shaft (12a) extends for the kneading element (4, 4c, 4d), has a distinctive conical, nose cone-shaped, or cylindrical form with hemispherical end that is coaxial or , parallel to the rotational axis of the kneading element (4, 4c, 4d).

3. The dough mixer with metering device according to Claim 1, **characterized in that** the circular surface (1f) which from the circular surface (1e) from which the drive shaft (12a) extends for the kneading element (4, 4c, 4d) has one or more holes (13) for the supply of liquid ingredients and that the hole or holes (13) are provided in a central region of the circular surface (1f), which is within the circular track of the ends of the kneading element (4, 4c, 4d).

4. The dough mixer with metering device according to Claims 1 through 3, **characterized in that** the chambers of the dough mixer together with the kneading element (4, 4c, 4d) are occasionally subjected to moving hot air which is introduced through a separate hole or nozzle or via one or more holes (13) used to charge liquid ingredients and which exits through a discharging opening (3a, 1d), and that this air is generated by the drive motor (12) of the dough mixer or from a pneumatic system and is heated prior to entry in order to sterilize the chamber and the kneading element, and loosens any bits of dough or leftover ingredients, and transports them by means of the exiting stream of air.

5. The dough mixer with metering device according to Claim 1, **characterized in that** the kneading element of the dough mixer comprises an arm (4), which extends radially from the end of the drive shaft (12a) and from the free end of which arm is attached a fixed pin (4c) with an axis running parallel to the rotational axis of the arm, on which is placed a cylindrical sleeve (4d) by means of an axial recessed hole and that both terminal regions of the sleeve (4d) are rounded-off, round-ended, or nose cone-shaped.

6. The dough mixer with metering device according to Claim 1 and partially according to Claim 2, **characterized in that** the kneading element comprises two or more arms (4) which radially are at some distance from the end of the drive shaft (12a), possibly at various angles to each other and on each end of which is attached a fixed pin (4c) with a longitudinal axis running parallel to the rotational axis of the arms (4) on which sleeves are placed of possibly different outside diameter and/or different forms, and that the axes of the individual pins (4c) on each of the arms (4) are not equidistant to the common rotational axis.

7. The dough mixer with metering device according to the Claims from 1 to 6, **characterized in that** the wall with its front side circular surface (1f) of the chamber of the dough mixer, which stands opposite to the circular surface (1e) from which the drive shaft (12a) for the kneading element (4, 4c, 4d) extends, is replaceable with walls that are suitable for changing the distance between both of the front side surfaces (1e, 1f) and that depending on this change the sleeves (4d) can also be substituted.

8. The dough mixture with metering device according to the protective Claim 1, **characterized in that** the metering device mounted on the dough mixer with vertical axis contains a dust region for the flour (14) in the upper region, and a metering mechanism within the same cylindrical container (5, 5a, 5b) in the lower region, and the stirring elements (7b) for the dust region of the flour, together with the stirring elements (7a) of the metering mechanism are activated by a shaft (8) that is shared coaxially with the container axis and that this shaft, in addition, is connected with a distribution cone (7) for the flour for the metering region and with a metering disk (9) with metering holes (9a) on the rim that are equidistant both from one another and to the rotational axis.

9. The dough mixer with metering device according to Claims 1 and 8, **characterized in that** in the container of the metering device, which the dust region for the flour (14) relating to the metering region is horizontally subdivided by an annular, funnel-like partition (6) through which the central opening of the upper part of the distribution cone (7) extends in order to form an annular duct (6c) for the flour (14), and that at least one stirring element (7b) operates which extends radially from the distribution cone (7) near the upper surface of the partition (6).

10. The dough mixer with metering device according to Claims 1, 8 and 9, **characterized in that** the metering mechanism in the metering device, which comprises a metering disk (9) with continuous metering holes (9a) driven (8a) by the same shaft (8) that drives the distribution cone (7) and the stirring elements (7a, 7b), that this rotatable metering disk is positioned between the fixed, level bottom plate (5b) of the container of the metering device and an annular, fixed sieve (10), and that the bottom plate (5b) forms the lower level and the sieve (10) covers the upper ring region of the metering disk (9) free of the distribution cone (7) and that the bottom plate (5b), in the region of the track of the metering holes (9a) of the metering disk (9), has a continuous outflow opening (5e).

11. The dough mixer with metering device according to Claims 1, 8, 9, 10, **characterized in that** the sieve (10) within the metering device, which covers the metering disk (9) at least in the track region, in the outflow region which is defined by the outflow hole (5e) on the bottom plate (5b), has no ducts (10a} for the flour, and that at least one stirring element at some distance from the distribution cone (7), while its rotation (8a) passes close to the surface of the sieve.

12. The dough mixer and metering device according to the Claims 1 through 11, **characterized in that** both of the devices can also function independently of each other, and the dough mixer with a known metering device or the metering device can be coupled with a known kneading device.

## Revendications

1. Malaxeur pour la préparation de pâte pour des produits à base de pâte, muni d'un dispositif de dosage pour les ingrédients farineux, du type à carter fermé à axe horizontal, dans lequel agit un organe de pétrissage à axe de rotation coaxial ou parallèle à l'axe de carter, **caractérisé en ce que** la chambre du malaxeur présente, à l'intérieur du carter (1), deux faces (1e, 1f) coaxiales et espacées l'une par rapport à l'autre, placées en regard l'une de l'autre, à forme intérieure sensiblement circulaire, faces entre lesquelles s'étendent deux tronçons de face d'enveloppe (1a) qui ont une allure d'arc de cercle et s'étendent avec la même ligne d'enveloppe et qui, dans la zone supérieure et la zone inférieure, se transforment en un tronçon de face (1b, 1c) plan, dont chacun est formé, en position de fermeture, au moins partiellement par la surface d'un registre (2, 3) coulissant (2c, 3c); **en ce que** le long de la zone périphérique, sur les deux faces (1e, 1f) à forme circulaire, vers les tronçons de faces d'enveloppe (1a) et vers les tronçons de face (1c, 1b) plans, est prévue une transition (1g) à grand rayon d'arrondi, et **en ce que** la face circulaire (1f), qui est en regard de la face circulaire (1e) plane, d'où sort l'arbre d'entraînement (12a) de l'organe de pétrissage (4, 4c, 4d), présente une forme légèrement conique ou bombée, en saillie vers l'intérieur de la chambre, coaxialement à l'axe de rotation de l'organe de pétrissage (4, 4c, 4d).

2. Malaxeur avec dispositif de dosage selon la revendication 1, **caractérisé en ce que**, dans la chambre du malaxeur, la face circulaire (1f) qui est en regard de la face circulaire (1e) d'où sort l'arbre d'entraînement (12a) pour l'organe de pétrissage (4, 4c, 4d), présente une extrémité à forme conique accentuée, conique en ergot ou cylindrique, à extrémité à forme hémisphérique. coaxiale ou parallèle à l'axe de rotation de l'organe de pétrissage (4, 4c, 4d).

3. Malaxeur avec dispositif de dosage selon la revendication 1, **caractérisé en ce que** la face circulaire (1f), qui est en regard de la face circulaire (1e) d'où sort l'arbre d'entraînement (12a) pour l'organe de pétrissage (4, 4c, 4d), présente un ou plusieurs perçages (13) pour la menée des ingrédients fluides, et **en ce que** le perçage ou les perçages (13) est/sont prévu(s) dans une zone centrale de la face circulaire (1f) située à l'intérieur de la trajectoire de déplacement en forme de cercle des extrémités de l'organe de pétrissage (4, 4c, 4d).

4. Malaxeur avec dispositif de dosage selon les revendications 1 à 3, **caractérisé en ce que** la chambre du malaxeur, avec l'organe de pétrissage (4, 4c, 4d), sont exposées de temps en temps à un passage d'air chaud, qui est insufflé par un perçage ou une buse propre, ou par un ou plusieurs perçages (13) prévus pour le garnissage avec les ingrédients liquides, et l'air chaud s'évacue par l'ouverture d'éjection (3a, 1d), et **en ce que** ce passage d'air est produit par le moteur d'entraînement (12) du malaxeur ou par une installation pneumatique, et le chauffage étant effectué avant l'insufflation, pour stériliser la chambre et l'organe de pétrissage et obtenir le détachement d'éventuelles particules de pâte ou de restes d'ingrédients et obtenir le transport dans l'écoulement d'air sortant.

5. Malaxeur avec dispositif de dosage selon la revendication 1, **caractérisé en ce que** l'organe de pétrissage du malaxeur est formé d'un bras (4), faisant saillie radialement de l'extrémité de l'arbre d'entraînement (12a) et à l'extrémité libre duquel est fixé un tourillon (4c) stationnaire, ayant un axe s'étendant parallèlement à l'axe de rotation du bras et sur lequel une douille (4d) cylindrique est enfilée, à l'aide d'un perçage borgne axial, et **en ce que** les deux zones d'extrémité de la douille (4d) sont de forme arrondie, en coupelle sphérique ou en cône en ergot.

6. Malaxeur avec dispositif de dosage selon la revendication 1 et partiellement selon la revendication 2, **caractérisé en ce que** l'organe de pétrissage est formé de deux bras (4) ou plus, qui font saillie radialement de l'extrémité de l'arbre d'entraînement (12a) en étant éventuellement coudés différemment l'un par rapport à l'autre, et bras sur chacune des extrémités desquels est fixé un téton (4c) stationnaire ayant un axe longitudinal parallèle à l'axe de rotation des bras (4), téton sur lequel sont chaque fois enfilées des douilles (4d) qui, le cas échéant, présentent un diamètre extérieur différent et/ou une forme différente, et **en ce que** les axes des différents tétons (4c) sur les bras (4) respectifs n'ont pas le même espacement par rapport à l'axe de rotation commun.

7. Malaxeur avec dispositif de dosage selon les revendications 1 à 6, **caractérisé en ce que** la paroi, avec la face circulaire frontale (1f) de la chambre, du malaxeur, qui est en regard de la face circulaire (1e) frontale d'où sort l'arbre d'entraînement (12a) pour l'organe de pétrissage (4, 4c, 4d), peut être remplacée par des parois convenant pour modifier l'espacement entre les deux faces frontales (1e, 1f), et **en ce que**, en fonction de cette modification, les douilles (4d) peuvent être remplacées.

8. Malaxeur avec dispositif de dosage selon la revendication 1, **caractérisé en ce que** le dispositif de dosage de montée sur le malaxeur, à l'intérieur du même récipient cylindrique (5, 5a, 5b) à axe vertical, contient, dans la zone supérieure, une zone d'accumulation pour la farine (14) et, dans la zone inférieure, un mécanisme de dosage, les organes agitateurs (7b) prévus pour la zone d'accumulation de la farine, conjointement avec les organes agitateurs (7a) du mécanisme de dosage, étant actionnés par un arbre (8) commun, coaxial à l'axe de récipient, et **en ce que** cet arbre est en outre relié à un cône répartiteur (7) pour la farine, allant vers la zone de dosage, et est relié à un disque de dosage (9), muni d'une couronne de perçages de dosage (9a) espacés selon le même espacement, entre eux et par rapport à l'axe de rotation.

9. Malaxeur avec dispositif de dosage selon les revendications 1 et 8, **caractérisé en ce que**, dans le récipient du dispositif de dosage, la zone d'accumulation pour la farine (14), allant à la zone de dosage, est subdivisée horizontalement par une paroi de cloisonnement (6) du genre d'un entonnoir ou trémie, à forme annulaire, à travers l'ouverture centrale de laquelle passe la partie supérieure du cône distributeur (7), pour former un passage (6c) à forme annulaire pour la farine (14), et **en ce qu'**au moins un élément agitateur (7b) qui ressort radialement du cône distributeur (7), agit à proximité de la face supérieure de la paroi de cloisonne-ment (6).

10. Malaxeur avec dispositif de dosage selon les revendications 1, 8 et 9, **caractérisé en ce que**, dans le dispositif de dosage, le mécanisme de dosage formé d'un disque de dosage (9) comprenant des perçages de dosages (9a) traversants, est entraîné (8a) par le même arbre (8) que celui qui entraîne le cône distributeur (7) avec les éléments agitateurs (7a, 7b), **en ce que** ce disque de dosage est monté à rotation entre la plaque de fond (5b) plane, stationnaire, du récipient du dispositif de dosage, et une grille (10) stationnaire à forme annulaire, la plaque de fond (5b) formant la face de pose inférieure et la grille (10) couvrant la zone annulaire supérieure, libre car étant à l'écart du cône distributeur (7), du disque de dosage (9), et **en ce que** la plaque de fond (5b) présente, dans la zone de la trajectoire de déplacement des perçages de dosage (9a) du disque de dosage (9) une ouverture de vidange (5e) traversante.

11. Malaxeur avec dispositif de dosage selon les revendications 1, 8, 9, 10, **caractérisé en ce que**, à l'intérieur du dispositif de dosage, la grille (10), couvrant le disque de dosage (9) au moins dans la zone de la trajectoire de déplacement des dispositifs de dosage (9a), dans la zone de vidange définie par le perçage de vidange (5e) ménagé sur la plaque de fond (5b), ne présente aucun passage (10a) pour la farine et **en ce qu'**au moins un organe agitateur (7a), en saillie du cône distributeur (7), passe à proximité de la grille, pendant sa rotation (8a).

12. Malaxeur avec dispositif de dosage selon les revendications 1 à 11, **caractérisé en ce que** chacun des deux dispositifs peut fonctionner également indépendamment l'un de l'autre, sachant qu'éventuellement le malaxeur muni d'un dispositif de dosage de type connu, respectivement le dispositif de dosage, peut être couplé à un malaxeur de type connu.
